# EUROPÄISCHE PATENTSCHRIFT

(11) **EP 1 466 425 B1**
(45) Veröffentlichungstag und Bekanntmachung des Hinweises auf die Patenterteilung: **08.06.2011**
(21) Anmeldenummer: 02795280.3
(22) Anmeldetag: 30.12.2002
(51) Int. Cl.: H04B 7/185, H04L 29/06

(54) **VERFAHREN ZUR REDUZIERUNG DER LATENZZEIT BEI DER INTERAKTIVEN DATENKOMMUNIKATION ÜBER EIN SATELLITENNETZWERK**
METHOD FOR THE REDUCTION OF LATENCY DURING INTERACTIVE DATA COMMUNICATION VIA A SATELLITE NETWORK
PROCEDE POUR REDUIRE LE TEMPS D'ATTENTE LORS D'UNE COMMUNICATION DE DONNEES INTERACTIVE SUR UN RESEAU DE TRANSMISSION PAR SATELLITE

(30) Priorität: 04.01.2002 DE 10200165
(43) Veröffentlichungstag der Anmeldung: 13.10.2004
(73) Patentinhaber: Rock, Klaus, 73432 Aalen (DE); Rock, Ute, 73432 Aalen (DE)
(72) Erfinder: Rock, Klaus, 73432 Aalen (DE); Rock, Ute, 73432 Aalen (DE)
(74) Vertreter: Lohr, Georg
(86) Internationale Anmeldenummer: PCT/EP2002/014793
(87) Internationale Veröffentlichungsnummer: WO 2003/056718

(56) Entgegenhaltungen:
- EP-A- 1 059 763
- WO-A-00/46669
- WO-A-01/88761
- US-A1- 2001 032 254
- CHRUNGOO A ET AL: "Smart proxy: reducing latency for HTTP based web transfers across satellite links" PERSONAL WIRELESS COMMUNICATIONS , 2000, Seiten 572-576, XP010534118 in der Anmeldung erwähnt

## Beschreibung

Die Erfindung betrifft ein Verfahren zur Reduzierung der Latenzzeit bei der interaktiven Datenkommunikation zwischen einem Client-Rechner und einem Server-Rechner, die über ein einen geostationären Satelliten enthaltendes Satellitennetzwerk miteinander verbunden sind, gemäß dem Oberbegriff von Anspruch 1, einem Datenträger nach dem Oberbegriff des Anspruchs 22 sowie ein Satellitennetzwerk zur Durchführung des Verfahrens gemäß dem Oberbegriff von Anspruch 20.

Bei der Datenkommunikation über Satellitennetzwerke werden bevorzugter Weise geostationäre Satelliten eingesetzt, die in einer Entfernung von ca. 36 000 km über der Erdoberfläche positioniert werden und sich mit der Erde unter Beibehaltung einer im Wesentlichen festen Position gegenüber der Erdoberfläche mitbewegen. Hierdurch erscheint es von der Erde aus betrachtet so, als wenn der Satellit stationär über dem unterhalb des Satelliten gelegenen Gebiet der Erdoberfläche stehen würde, in welchem die Kommunikation mit dem Satelliten möglich ist. Dieses Gebiet wird häufig auch als "Footprint" bezeichnet.

Es gibt mittlerweile zahlreiche Satelliten, die sich praktisch wie Perlen auf einer Schnur in einem Abstand von ca. 36 000 km über dem Äquator aufreihen.

Aufgrund dieses großen Abstandes und der endlichen Ausbreitungsgeschwindigkeit von elektromagnetischen Signalen tritt bei der Datenkommunikation über geostationäre Satelliten das Problem auf, dass die Laufzeit eines elektromagnetischen Signals von einem Sender auf der Erde zum Satelliten und von dort aus zum Empfänger ca. 0,24 Sekunden beträgt, so dass eine vom Empfänger ohne Zeitverzögerung abgesandte Antwort den Sender infolge der sich zusätzlich ergebenden elektronischen Zeitverluste bei der Signalwandlung frühestens erst nach ca.2 Sekunden erreicht.

Für die interaktive Datenkommunikation zwischen einem Client-Rechner und einem Server-Rechner, bei der der Server-Rechner die eigentliche Datenverarbeitung durchführt, und der Client-Rechner lediglich die Funktion eines intelligenten Terminals übernimmt, welches aus den über den geostationären Satelliten vom Server-Rechner übertragenen Daten eine interaktive Bildschirmdarstellung für den Benutzer des Client-Rechners erzeugt, führt diese häufig auch als Latenzzeit bezeichnete Zeitverzögerung zwangsweise dazu, dass ein vom Benutzer des Client-Rechners z.B. über eine Tastatur eingegebenes Zeichen oder eine Mausbewegung frühestens nach zwei Sekunden durch ein entsprechendes Echo des Server-Rechners auf dem Bildschirm des Client-Rechners bestätigt wird.

Aufgrund dieser bei der interaktiven Datenkommunikation nicht hinnehmbaren Zeitverzögerung von ca. 2 Sekunden, die bei jeder Eingabe des Benutzers über die Tastatur, Maus oder sonstige Dateneingabeeinrichtung des Client-Rechners auftritt, sind interaktive Client-Server-Anwendungen, wie z.B. ASP-Software mit datengetriebenen Anwendungen, die z.B. bei terrestrischen Verbindungen bei einer großen Anzahl von Benutzern in vorteilhafter Weise mit Hilfe von Betriebssystemen wie UNIX oder Windows 2000 Server etc., durchgeführt werden können, über geostationäre Satelliten in der Praxis nicht realisierbar.

Andererseits eignen sich Satellitenverbindungen aufgrund ihrer hohen Bandbreite und Übertragungssicherheit bestens zur Übertragung von Massendaten, wie beispielsweise analogen und digitalen Fernsehsendungen, Videos sowie Internet-Downloads, was darauf zurückzuführen ist, dass hierbei keine interaktiven Abfragen und Rückbestätigungen über den Satelliten übertragen werden müssen.

Diese Massendaten werden über sogenannte Satelliten-HUBS und mit diesen verbundene zentrale Server-Rechner als fortlaufender Datenstrom an den geostationären Satelliten gesendet, und von diesem im Bereich des Footprints des Satelliten an eine Vielzahl von Satelliten-Empfangsanlagen verteilt.

Aus "Chrungoo, Abhay, et. al.: Smart Proxy: Reducing Latency for http Based Web Tranfer Across Satellite Links. In: Personal Wireless Communications, 2000, IEEEE International Conference on 2000, S.572-576, " ist es in diesem Zusammenhang bekannt, bei der sequentiellen seitenweisen Übertragung von Web-Seiten über eine Satellitenverbindung auf der Basis des Hypertext Transfer Protokolls (HTTP), dem Sender-Rechner und dem Empfänger-Rechner einen Smart-Proxy zuzuordnen, und anstelle des TCP-Übertragungsprotokolls das UDP-Protokoll zu verwenden.

Ferner ist es aus " Criscuolo, Ed, et.al.: Transport Protocols and Applications for Internet Use in Space. In: Aerospace Conference, 2001, IEEE Proceedings, Vol.2, 2001; S.2/951-2/962, Vol.2 " bekannt, dass sich die derzeitigen Standard-Internet-Protokolle grundsätzlich auch bei Raumfahrzeugen einsetzen lassen.

Die Artikel geben keinen Hinweis darauf, interaktive Client-Server Anwendungen, die über eine geostationäre Satellitenverbindung betrieben werden, und die sich insbesondere durch einen blinkenden Cursor auf dem Bildschirm des Client-Rechners auszeichnen, im Wesentlichen ohne Rückbestätigungen zu betreiben.

Der Artikel von " CHOTIKAPONG, Y, SUN, Z.: Evaluation of Application Performance for TCP/IP via Satellite Links, In: Satellite Services and the Internet(Ref.No.2000/017), IEE Seminar on 2000; S.4/1-4/4" beschreibt die grundsätzlichen Probleme, die mit der Übertragung von Daten über eine Satellitenverbindung beim Einsatz von TCP verbunden sind. Der Artikel kommt auf Seite 4/3 zu dem Schluss, dass sich die Leistungsfähigkeit von HTTP-Anwendungen durch den Einsatz von" Pipelining " oder einer vergrößerten anfänglichen Fenstergröße von TCP zwar noch steigern lässt, dass jedoch die bisherigen Entwicklungen oder Lösungen für Arbeiten mit TCP in einem geostationären Satellitennetzwerk offensichtlich nicht mehr weiter verbessert werden können.

Weiterhin beschreibt die DE-A-10017631 ein Verfahren und einen Gateway zum transparenten Übertragen von sogenannten SS7-Signalisierungsinformationen über ein IP-Netzwerk. Die Schrift gibt ebenfalls keinen Hinweis darauf, interaktive Client-Server Anwendungen, die über eine geostationäre Satellitenverbindung betrieben werden, im Wesentlichen ohne Rückbestätigungen zu betreiben.

Der Artikel " Ein Chatprogramm mit UDP, Chatten mit UDP-Sockets zu finden im Internet am 25. April 2001 (Nachweis durch http:web.archive.org) unter http:web.archive.org/web/*/www.fh-niederrhein.de/gkorsch/javakurs/wn7/udp.htm; " beschreibt die Möglichkeit, ein einfaches Chatprogramm unter Einsatz von UDP-Datagrammen zu realisieren. Der Artikel gibt keinen Hinweis auf den Einsatz von UDP beim Betreiben einer interaktiven Client-Server Anwendung über einen geostationären Satelliten.

Die US 2001/0032254 A1 beschreibt ein Verfahren zum Zugriff auf das Internet über eine WLAN genannte Funkstrecke. Über einen sogenannten Wireless Network Tunneler werden gängige Internetprotokolle so umgesetzt, dass sie mittels W-LAN geeigneter Protokolle über einen W-LAN access point zu einem WLAN Client übertragen werden können. Der WLAN Client hat ein Netzwerkinterface, das die WLAN-Protokolle wieder in herkömmliche Internetprotokolle umsetzt, so dass die Anwendungssoftware auf dem WLAN Client nicht an die Übertragung der Daten per WLAN angepasst werden muss. Eine Datenübertragung von dem WLAN Client zu einem weiteren Rechner im Internet erfolgt analog: Die Internetprotokolle der Anwendungssoftware des WLAN Clienten werden von einem Netzwerkinterface in WLAN geeignete Protokolle umgesetzt, zu einem WLAN access point übertragen und dort von einem weiteren Umsetzer wieder in die üblichen Internetprotokolle umgesetzt.

Demgemäß ist es eine Aufgabe der vorliegenden Erfindung, ein Verfahren sowie ein Satellitennetzwerk zur Durchführung des Verfahrens zu schaffen, mit denen sich die Latenzzeit bei der interaktiven Datenkommunikation zwischen einem Client-Rechner und einem Server-Rechner, die über einen geostationären Satelliten miteinander verbunden sind, reduzieren lässt.

Diese Aufgabe wird gemäß der Erfindung durch die Gegenstände der Ansprüch 1, 20 und 22 gelöst.

Bevorzugte Ausfürungsformen der Erfindung sind Gegenstand der Unteransprüchen.

Nach dem erfindungsgemäßen Verfahren zur Reduzierung der Latenzzeit bei der interaktiven Datenkommunikation zwischen einem Client-Rechner und einem Server-Rechner, sind die beiden Rechner über ein einen geostationären Satelliten enthaltendes Satellitennetzwerk miteinander verbunden. Hierbei wird auf dem Server-Rechner ein interaktives Datenverarbeitungsprogramm ausgeführt, z.B. eine Datenbankanwendung, ein Textverarbeitungsprogramm etc., welches Daten erzeugt, die in Form von Datenpaketen über das Satellitennetzwerk auf den Client-Rechner übertragen und von diesem über ein mit dem Client-Rechner verbundenes Anzeigemedium, beispielsweise einen Monitor, in Form eines interaktiven Anwenderprogramms dargestellt werden. Dem Bediener des Client-Rechners, der mit dem interaktiven Anwenderprogramm arbeitet, wird hierbei auf dem Monitor durch eine vom Anwenderprogramm erzeugte Eingabeaufforderung, z.B. einen blinkenden Cursor, eine Bildschirmmitteilung, ein akustisches Signal oder in sonstiger Weise signalisiert, dass das Anwenderprogramm die Eingabe von weiteren Daten benötigt, die vom Bediener über ein Eingabemedium, z.B. über eine Tastatur, ein Grafiktablett, eine Maus oder ein sonstiges Eingabegerät einzugeben sind. Die weiteren Daten werden dann vom Client-Rechner in Form von weiteren Datenpaketen über das Satellitennetzwerk an den Server-Rechner übersandt, der die Daten der weiteren Datenpakete dazu verwendet, mit der Ausführung des Datenverarbeitungsprogramms fortzufahren.

Das erfindungsgemäße Verfahren zeichnet sich dadurch aus, dass das Übersenden der weiteren Datenpakete vom Client-Rechner an den Server-Rechner im Wesentlichen ohne eine Rückbestätigung des Empfangs der übersandten weiteren Datenpakete durch den Server-Rechner erfolgt.

Das Übersenden der Datenpakete vom Server-Rechner an den Client-Rechner kann ebenfalls im Wesentlichen ohne eine Rückbestätigung des Empfangs der übersandten Datenpakete durch den Client-Rechner erfolgen, was bei einigen Anwendungen bereits für ein praktikables Arbeiten schon ausreichend sein kann. Im Hinblick auf eine optimale Ausführungsgeschwindigkeit des interaktiven Programms auf dem Client-Rechner ist es in diesem Zusammenhang jedoch von Vorteil, wenn sowohl das Hinaufsenden der weiteren Daten vom Client-Rechner zum Server-Rechner, als auch das Heruntersenden der Daten vom Server-Rechner zum Client-Rechner im Wesentlichen ohne die Übersendung von Rückbestätigungen oder Aufforderungen zu Rückbestätigungen erfolgt.

Hierbei bedeutet "im Wesentlichen", dass eine Rückbestätigung im Vergleich mit herkömmlichen bekannten interaktiven Client-Server-Anwendungen, die eine terrestrische Netzwerkverbindung nutzen, bei der eine Bestätigung in der Regel nach jedem übersandten Datenpaket erfolgen muss, erheblich seltener übertragen wird, beispielsweise nach 100 oder mehr übersandten Datenpaketen.

Wie der Anmelder gefunden hat, wird es hierdurch bei der interaktiven Datenkommunikation über einen geostationären Satelliten in überraschender Weise überhaupt erst möglich, interaktive Client-Server-Anwendungen, wie z.B. ASP-Software oder Internetanwendungen, mit einer Geschwindigkeit ablaufen zu lassen, die der Bediener derartiger Client-Server-Anwendungen bei seiner interaktiven Arbeit mit derartigen Anwendungen als Mindestvoraussetzung für ein effizientes Arbeiten erwartet, und überdies von terrestrischen Verbindungen her bereits gewohnt ist.

Dies ist darauf zurückzuführen, dass anders als bei terrestrischen Systemen - bei denen insbesondere im Bereich des Internets ein ständiges Rückbestätigen des korrekten Empfangs der übertragenen Datenpakete zwischen Client-Rechner und Server-Rechner aufgrund des ständigen Wechsels der Übertragungswege innerhalb der terrestrischen Netzwerkverbindung (Routing) zwingend erforderlich ist die Übertragung von Daten über Satellitennetzwerke mit geostationären Satelliten in höchstem Maße zuverlässig und im Wesentlichen auf einen festen Übertragungsweg beschränkt ist. Wie vom Anmelder erkannt wurde, kann hierdurch auch ohne die ständige Übersendung von Rückbestätigungen (Acknowledgements), bzw. die Übersendung von Aufforderungen zur Rückbestätigung des Empfangs von zuvor übersandten Datenpaketen - die jeweils eine Zeitverzögerung von mindestens 2 Sekunden mit sich bringen - eine interaktive Arbeit am Client-Rechner mit einer sehr hohen Zuverlässigkeit und in einer Weise erfolgen, wie sie von Client-Server-Anwendungen her bekannt ist, die über terrestrischen Netzwerkverbindungen betrieben werden.

Ein weiterer Vorteil, der mit dem erfindungsgemäßen Verfahren verbunden ist, besteht darin, dass die Übertragung der Daten zwischen den mit dem Server in Verbindung stehenden Bodenstationen (Satelliten-HUBS) und dem geostationären Satelliten, sowie zwischen dem Satelliten und den zahlreichen Empfangsstationen, die je nach Client-Server-System bis zu einige tausend Stationen umfassen können, mit einer bei terrestrischen Systemen nicht erreichbaren Abhörsicherheit erfolgt.

Gemäß der bevorzugten Ausführungsform des erfindungsgemäßen Verfahrens werden die vom Server-Rechner an den Client-Rechner übersandten Datenpakete und vorzugsweise auch die vom Client-Rechner an den Server-Rechner übersandten weiteren Datenpakete über den geostationären Satelliten in Übereinstimmung mit dem UDP-Netzwerkübertragungsprotokoll übertragen. Dieses UDP-Netzwerkübertragungsprotokoll stellt zwar ein bekanntes Standard-Übertragungsprotokoll beim einseitigen Herunterladen von großen Datenmengen wie Videobildern oder Musikdateien etc., von Servern dar, bei denen das Auftreten von vereinzelten Fehlern in den Datenpaketen bis auf eine geringfügige Reduzierung der Qualität nicht von Bedeutung ist; es eignet sich jedoch aufgrund der fehlenden Möglichkeiten von Rückbestätigungen in keinster Weise als Übertragungsprotokoll für interaktive Client-Server-Anwendungen, bei denen die Datenübertragung über eine terrestrische Netzwerkverbindung erfolgt, und bei denen bereits das Fehlen von nur einigen Daten-Bits in einem Datenpaket das erneute Übersenden des gesamten Pakets erfordert.

Hierbei werden die in Übereinstimmung mit dem UDP-Netzwerkübertragungsprotokoll vom Server-Rechner zum Client-Rechner übertragenen Datenpakete und/oder die in umgekehrter Richtung vom Client-Rechner zum Server-Rechner übertragenen weiteren Datenpakete durch eine Konvertierung aus Datenpaketen und/oder weiteren Datenpaketen generiert, die vom Server-Rechner, bzw. vom Client-Rechner zur Übertragung nach dem TCP-Netzwerkübertragungsprotokoll erzeugt wurden, welches das derzeitige Standard-Übertragungsprotokoll für eine fehlerfreie Übertragung von Daten über das Internet darstellt, und von nahezu allen derzeit verwendeten Betriebssystemen für Client-Server-Anwendungen benutzt wird.

Die Konvertierung kann hierbei durch eine entsprechende Software auf dem Client-Rechner, bzw. eine entsprechende Software auf dem Server-Rechner erfolgen, die ein nach dem TCP-Standard erzeugtes Datenpaket durch den Austausch oder Verändern der entsprechenden Teile des Datenpakets in bekannter Weise in ein dem UDP-Standrard entsprechende Datenpaket überführt. Die Software greift hierbei vorzugsweise auf der Ebene des Betriebssystems ein, was bei dem unter der Bezeichnung "Windows 2000 Server" der Mircrosoft Corporation, USA vertriebenen Betriebssystem z.B. im Bereich des als "Winsocket" bezeichneten Programmmoduls erfolgen kann. Die Umwandlung kann jedoch in gleicher Weise mit Hilfe von geeigneten Hardwareeinrichtungen erfolgen, die z.B. durch entsprechend ausgestaltete Teile von Netzwerkkarten, über die der Client-Rechner, bzw. der Server-Rechner mit ihrer zugehörigen Satelliten-Sende/Empfangseinheit gekoppelt sind, realisiert sein können.

Gemäß des erfindungsgemäßen Verfahrens wird der Aufbau der Netzwerkverbindung und/oder der Abschluss der Übertragung der Datenpakete und/oder weiteren Datenpakete zwischen dem Client-Rechner und dem Server-Rechner über den geostationären Satelliten durch Übertragung eines Datenpakets und/oder eines weiteren Datenpakets veranlasst, welches zur Übertragung in Übereinstimmung mit dem TCP-Netzwerkübertragungsprotokoll erzeugt und vorzugsweise nicht konvertiert wurde. Hierdurch wird ein sicherer Verbindungsaufbau über den Satelliten und eine Zuordnung der Netzwerkverbindung zu einem festen Port oder Übertragungskanal des geostationären Satelliten gewährleistet, was bei der sich anschließenden Übertragung nach dem UDP-Netzwerkübertragungsprotokoll durch Konvertierung der TCP-Datenpakete in UDP-Datenpakete für eine störungsfreie Datenübertragung in beiden Richtungen ohne den Einsatz von Rückbestätigungen (Acknowledgements) sorgt.

Um das Verhalten des interaktiven Anwenderprogramms dem Verhalten eines über eine terrestrische Verbindung betriebenen Anwenderprogramms noch weiter anzunähern, kann es weiterhin vorgesehen sein, dass die weiteren Datenpakete vor dem Versenden an den Server-Rechner auf redundante Daten hin untersucht, und ermittelte redundante Daten aus den weiteren Datenpaketen entfernt oder durch bereits eingegebene oder vorgehaltene Daten ersetzt werden. Das Entfernen der redundanten Daten aus den weiteren Datenpakten kann hierbei entweder hardwaremäßig durch eine Hardwareeinrichtung des Client-Rechners oder durch ein auf dem Client-Rechner laufendes Datenverarbeitungsprogramm erfolgen, welches vorzugsweise ebenfalls auf Betriebssystemebene angreift.

Die aus den weiteren Datenpaketen entfernten redundanten Daten können in den weiteren Datenpaketen vom Client-Rechner übersandte, sich periodisch wiederholende Teile von Daten umfassen, insbesondere Teile von Daten, die die Aufrechterhaltung der Netzwerkverbindung zwischen dem Client-Rechner und dem Server-Rechner gewährleisten.

Gemäß einer in Hinblick auf eine hohe Arbeitsgeschwindigkeit weiter optimierten Ausgestaltung des erfindungsgemäßen Verfahrens werden die sich periodisch wiederholenden Teile von Daten, die durch die entsprechende Betriebssystemsoftware des Client-Rechners zur Übersendung an den Server-Rechner erzeugt werden, und die aus den weiteren Datenpakten entfernt wurden, durch den Server-Rechner selbständig erzeugt, ohne dass diese vom Client-Rechner tatsächlich übersandt wurden.

In entsprechender Weise werden die vom Server-Rechner erzeugten Datenpakete vor dem Versenden an den Client-Rechner auf redundante Daten hin untersucht und ermittelte redundante Daten aus den Datenpaketen entfernt. Es besteht jedoch die Möglichkeit, dass die ermittelten redundanten Daten in den Datenpakten durch Daten ersetzt werden, die im Server-Rechner z.B. abgespeichert sind oder bei Bedarf durch eine Berechnung erzeugt werden.

Hierbei kann das Entfernen der redundanten Daten aus den Datenpakten hardwaremäßig durch eine Hardwareeinrichtung des Server-Rechners oder softwaremäßig durch ein auf dem Server-Rechner laufendes Datenverarbeitungsprogramm erfolgen.

Die in den Datenpaketen enthaltenen und aus diesen zu entfernenden redundanten Daten in den vom Server-Rechner übersandten Datenpaketen umfassen dabei insbesondere sich periodisch wiederholende Teile von Daten, die vom interaktiven Anwenderprogramm zur interaktiven Darstellung der auf dem Bildschirm verwendeten Blinkdarstellungen von Eingabeaufforderungen benötigt werden. Sie können jedoch in gleicher Weise Teile von Daten umfassen, die vom Client-Rechner zur Aufrechterhaltung der Netzwerkverbindung zwischen dem Client-Rechner und dem Server-Rechner benötigt werden.

Gemäß einer weiteren Ausführungsform der Erfindung werden die aus den vom Server-Rechner übersandten Datenpaketen entfernten, sich periodisch wiederholenden Teile von Daten durch den Client-Rechner vorzugsweise selbständig erzeugt, ohne dass diese vom Server-Rechner tatsächlich übersandt wurden. So kann insbesondere die Blinkdarstellung des Cursors auf dem Bildschirm des Client-Rechners softwaremäßig durch den Client-Rechner selbst selbstständig erzeugt werden, ohne dass hierzu entsprechende Daten vom Server-Rechner in regelmäßigen Abständen übersandt werden müssen.

Weiterhin kann es vorgesehen sein, dass der Client-Rechner Mittel aufweist, welche häufig wiederkehrende Datenfolgen in den Datenpaketen ermitteln, eine Kopie dieser häufig wiederkehrenden Datenfolgen oder eine diesen Datenfolgen entsprechende Bilddarstellung in einem Speicher des Client-Rechners ablegen und anstelle der wiederkehrenden Datenfolgen die im Speicher abgelegte Kopie der Datenfolgen oder die Bilddarstellung zur Darstellung auf dem interaktiven Anzeigemedium bringen.

Bei der bevorzugten Ausführungsform der Erfindung werden mehrere der zwischen dem Server-Rechner und dem Client-Rechner über den geostationären Satelliten übertragenen Datenpakete und/oder weiteren Datenpakete zu größeren Datenpaketen und/oder größeren weiteren Datenpaketen zusammengefasst, um den Datendurchsatz zu erhöhen. Hierbei wird die Länge der zusammengefassten größeren Datenpakete und/oder der zusammengefassten größeren weiteren Datenpakete vorzugsweise derart gewählt, dass eine Übertragung der Datenpakete über den geostationären Satelliten gerade noch ohne eine Fragmentierung der Datenpakete erfolgt. Diese optimierte Größe der Datenpakete und/oder weiteren Datenpakete in Fachkreisen häufig auch als "Maximum Transmission Unit " (MTU) bezeichnet - wird vorzugsweise durch den Server-Rechner bei der Einrichtung des Satellitennetzwerks für jede einzelne Verbindung zu einem Client-Rechner auf der Basis von verbindungsspezifischen Parametern bestimmt, was beispielsweise durch Übertragen von Testdatenpakten unterschiedlicher Länge und Messen der zugehörigen Übertragungsdauer erfolgen kann.

In gleicher Weise besteht jedoch die Möglichkeit, die optimierte Größe (MTU) der größeren Datenpakete und/oder der größeren weiteren Datenpakete durch den Server-Rechner während des Datenaustauschs zwischen dem Client-Rechner und dem Server-Rechner für die jeweilige Verbindung zum Client-Rechner auf der Basis von verbindungsspezifischen Parametern von Zeit zu Zeit dynamisch zu bestimmen, z.B. durch Berechnung oder durch eine Variation der Größe der Datenpakete.

Gemäß eines weiteren der Erfindung zugrunde liegenden Gedankens umfasst ein Satellitennetzwerk zur Durchführung des zuvor beschriebenen Verfahrens einen über einen geostationären Satelliten mit einem Client-Rechner verbundenen Server-Rechner, wobei auf dem Server-Rechner ein Datenverarbeitungsprogramm ausgeführt wird, welches Daten erzeugt, die in Form von Datenpaketen auf den Client-Rechner übertragen und von diesem über ein mit dem Client-Rechner verbundenes Anzeigemedium in Form eines interaktiven Anwenderprogramms dargestellt werden. Hierbei wird dem Bediener des Client-Rechners durch eine vom Anwenderprogramm dargestellte Eingabeaufforderung die Eingabe von weiteren Daten signalisiert, die in Form von weiteren Datenpaketen über das Satellitennetzwerk an den Server-Rechner übersandt werden.

Das erfindungsgemäße Satellitennetzwerk zeichnet sich dadurch aus, dass das Übersenden der weiteren Datenpakete vom Client-Rechner an den Server-Rechner im Wesentlichen ohne eine Rückbestätigung des Empfangs der übersandten weiteren Datenpakete durch den Server-Rechner erfolgt. Hierbei bedeutet "im Wesentlichen", dass eine Rückbestätigung im Vergleich mit herkömmlichen bekannten interaktiven Client-Server-Anwendungen, die eine terrestrische Netzwerkverbindung nutzen, bei der eine Bestätigung in der Regel nach jedem Datenpaket erfolgen muss, erheblich seltener übertragen wird, beispielsweise nach 50, 100 oder mehr übersandten Datenpaketen. Alternativ hierzu kann in entsprechender Weise das Übersenden der Datenpakete vom Server-Rechner an den Client-Rechner ebenfalls im Wesentlichen ohne eine Rückbestätigung des Empfangs der übersandten Datenpakete durch den Client-Rechner erfolgen, was bei einigen Anwendungen bereits schon für ein praktikables Arbeiten ausreichend ist. Im Hinblick auf eine optimale Ausführungsgeschwindigkeit des interaktiven Programms auf dem Client-Rechner ist es in diesem Zusammenhang jedoch von Vorteil, wenn sowohl das Hinaufsenden der weiteren Daten vom Client-Rechner zum Server-Rechner, als auch das Heruntersenden der Daten vom Server-Rechner zum Client-Rechner im Wesentlichen ohne die Übersendung von Rückbestätigungen oder Aufforderungen zu Rückbestätigungen erfolgt.

Bei dem zuvor genannten Satellitennetzwerk handelt es sich insbesondere um ein IP-Satellitennetzwerk, bei dem die Datenpakete und weiteren Datenpakete nach dem Internet Protokoll (IP) versandt werden, welches die Grundebene für die Datenkommunikation zwischen zwei Rechnern darstellt, auf der das TCP- sowie das UDP-Netzwerkübertragungsprotokoll aufsetzen.

Schließlich umfasst ein weiterer dem erfindungsgemäßen Prinzip zugrundeliegender Gedanke einen Datenträger mit einem Softwareprogramm, welches die Reduzierung der Latenzzeit bei der interaktiven Datenkommunikation zwischen einem Client-Rechner und einem Server-Rechner nach dem zuvor beschriebenen Verfahren durchführt, die über ein einen geostationären Satelliten enthaltendes Satellitennetzwerk miteinander verbunden sind. Der Datenträger kann hierbei insbesondere die Festplatte des Client-Rechners und/oder Server-Rechners, oder aber auch ein externer Datenträger, wie eine CD-ROM oder DVD-ROM oder ein sonstiges Trägermedium beinhalten.

Das auf dem Datenträger gespeicherte Softwareprogramm zeichnet sich durch einen Programmcode aus, der die vom Client-Rechner während der Darstellung des interaktiven Anwenderprogramms oder der Eingabe von Daten erzeugten, an den Server-Rechner zu übersendenden Aufforderungen zu Rückbestätigungen des Empfang der weiteren Datenpakete im Wesentlichen vollständig aus den weiteren Datenpaketen entfernt, bevor diese an den Server-Rechner übersandt werden, bzw. in der umgekehrten Richtung die vom Datenverarbeitungsprogramm des Server-Rechners während der Darstellung des interaktiven Anwenderprogramms erzeugten, an den Client-Rechner zu übersendenden Aufforderungen zu Rückbestätigungen des Empfangs der Datenpakete im Wesentlichen vollständig aus den Datenpaketen entfernt, bevor diese an den Client-Rechner übersendet werden.

Die Erfindung wird nachfolgend mit Bezug auf die Zeichnung anhand einer bevorzugten Ausführungsform beschrieben.

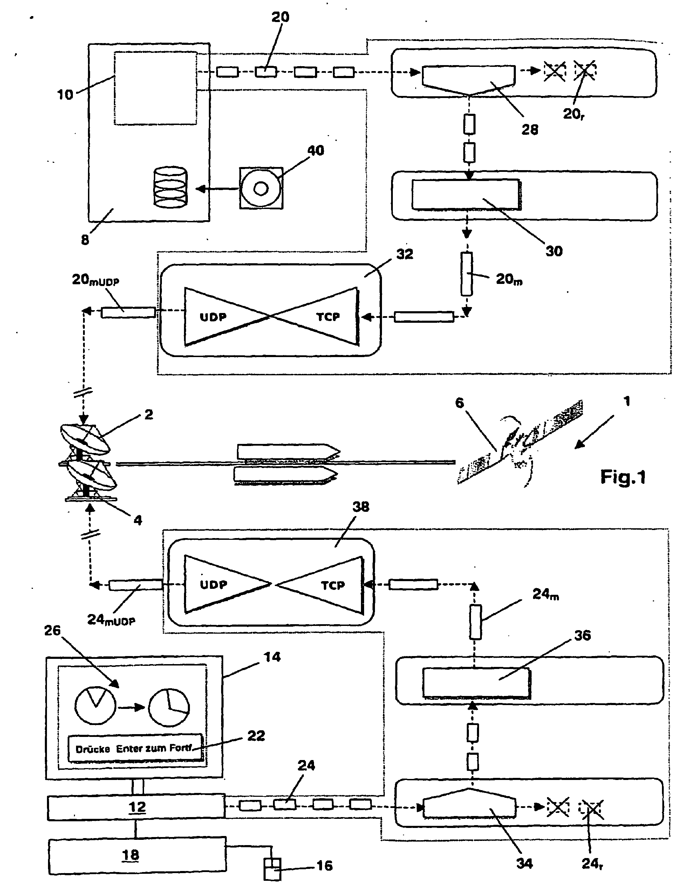

In der Zeichnung zeigt
- Fig. 1: eine schematische Darstellung eines erfindungsgemäßen Satellitennetzwerks mit den einzelnen Verfahrensschritten zur erfindungsgemäßen Reduzierung der Latenzzeit bei einer interaktiven Client-Server-Anwendung.

Wie in Fig. 1 dargestellt ist, umfasst ein erfindungsgemäßes Satellitennetzwerk 1 eine serverseitige Bodenstation (Satelliten-HUB) 2 sowie eine clientseitige Bodenstation (4, die über einen geostationären Satelliten 6 zur Datenkommunikation miteinander verbunden sind.

Die serverseitige Bodenstation 2 ist über nicht näher bezeichnete Leitungen mit einem Server-Rechner 8 verbunden, der mit einem Client-Server-Betriebsystem wie z.B. UNIX oder dem Betriebssystem "Windows 2000 Server" betrieben wird, und auf dem ein Datenverarbeitungsprogramm 10, z. B. eine Tabellenkalkulation, ausgeführt wird.

Die clientseitige Bodenstation 4 ist über ebenfalls nicht näher bezeichnete Datenleitungen mit einem Client-Rechner 12 verbunden, an den ein Anzeigemedium in Form eines Monitors 14 sowie ein Eingabemedium in Form einer Tastatur 16 und/oder Maus 18 zur Dateneingabe angeschlossen sind. Der Client-Rechner 12 wird dabei mit dem clientseitigen Teil des Client-Server Betriebssystems betrieben, beispielsweise dem unter der Bezeichnung "Terminal Service" bekannten Betriebssystem der Micorsoft Coproration, welches vom Datenverarbeitungsprogramm 10 des Server-Rechners 8 erzeugte und in Form von Datenpaketen 20 übersandte Daten erhält, die auf dem Monitor 14 als interaktives Anwenderprogramm 26 dargestellt werden, was in Fig. 1 durch die schematisch eingezeichneten Kreisdiagramme angedeutet ist.

Der Bediener des interaktiven Anwenderprogramms wird bei der Arbeit mit dem Anwenderprogramm 26 durch eine auf dem Monitor 14 dargestellte Eingabeaufforderung 22, z.B. in Form eines blinkenden Cursors oder einer Textmitteilung wie "PRESS ENTER TO CONTINUE" dazu aufgefordert, weitere Daten über die Tastatur 16 oder die Maus 18 einzugeben, die in Form von weiteren Datenpaketen 24 über den geostationären Satelliten 6 zum Server 8 gesandt und von diesem für die weitere Ausführung des Datenverarbeitungsprogramms 10 benötigt werden.

Wie der Darstellung von Fig. 1 weiterhin entnommen werden kann, werden die Datenpakete 20 durch das Datenverarbeitungsprogramm 10 als einzelne Datenpakete erzeugt, die den Anforderungen nach dem TCP-IP Netzwerkübertragungsprotokoll genügen. Dies bedeutet, dass die Datenpakete 20 insbesondere Daten enthalten, die Rückbestätigungen über den Empfang von zuvor vom Client-Rechner 12 empfangenen Datenpaketen oder aber Aufforderungen an den Client-Rechner 12 zur Übersendung von Rückbestätigungen für den sicheren Erhalt der jeweiligen Datenpakete 20 darstellen. Diese TCP-Datenpakete 20 werden nach ihrer Erzeugung vorzugsweise einem Redundanzfilter 28 zugeführt, der die vom Server-Rechner 8 erzeugten Datenpakete 20 vor dem Versenden an den Client-Rechner 12 über den geostationären Satelliten 6 auf redundante Daten 20, hin untersucht und die ermittelten redundanten Daten 20, aus den Datenpaketen 20 entfernt oder - falls für die jeweilige Anwendung sinnvoll - durch im Server-Rechner 8 vorgehaltene Daten, die vom Client-Rechner beispielsweise zur Aufrechterhaltung der Netzwerkverbindung zwischen dem Client-Rechner und dem Server-Rechner benötigt werden, ersetzt.

Der Redundanzfilter 28 kann dabei entweder hardwaremäßig durch eine Hardwareeinrichtung des Server-Rechners 8 oder aber auch softwaremäßig durch ein auf dem Server-Rechner 8 laufendes Datenverarbeitungsprogramm realisiert sein.

Im Anschluss daran werden die um die redundanten Daten 24, bereinigten Datenpakete 20 einer serverseitigen Einheit 30 zur Optimierung der Paketgröße zugeführt, welche die Datenpakete 20 zu größeren Datenpakten 20ₘ zusaminenfasst, deren Länge der maximal ohne eine Fragmentierung über das Netzwerk 1 übertragbaren Paketlänge (MTU) entspricht.

Die optimierten Datenpakete 20ₘ werden anschließend einem Protokoll-Konverter 32 zugeführt. Der Protokoll-Konverter 32, der vorzugsweise ebenfalls softwaremäßig im Server-Rechner 8 realisiert ist, konvertiert die TCP-konformen Datenpakete 20ₘ in der Weise, dass diese nach der Konvertierung den Erfordernissen des UDP-Netzwerkübertragungsprotokolls genügen und die darin enthaltenen Rückbestätigungen, bzw. die Aufforderungen zur Übersendung von Rückbestätigungen eliminiert oder zumindest neutralisiert sind. Die konvertierten Datenpakete 20_{mUDP} werden anschließend an die serverseitige Bodenstation 2 weitergeleitet und von dort aus über den geostationären Satelliten 6 an die clientseitige Bodenstation 4 übertragen, von wo aus sie vorzugsweise ohne weitere Konvertierung dem Client-Rechner 12 zugeführt werden, der diese Datenpakete 20_{mUDP} unmittelbar weiterverarbeitet und die darin enthaltenen Daten zur Darstellung auf dem Monitor 14 bringt.

Wenn der Bediener des Client-Rechners 12 bei seiner Arbeit mit dem interaktiven Anwendungsprogramm eine Eingabe über die Tastatur 16 oder die Maus 18 vornimmt, beispielsweise als Antwort auf die Bildschirmdarstellung, die vom Client-Rechner 12, bzw. dessen Betriebssystem aus den zuvor vorn Server-Rechner 8 übersandten Datenpaketen 20_{mUDP} erzeugt wurde, werden die eingegebenen Befehle und weiteren Daten vom Betriebssystem des Client-Rechners 12 in Form von weiteren Datenpaketen 24 erzeugt, die den Anforderungen des TCP-IP Netzwerkübertragungsprotokolls entsprechen.

Die in dieser Weise erzeugten weiteren TCP-Datenpakete 24 werden gemäß der Darstellung von Fig. 1 nach ihrer Erzeugung vorzugsweise einem weiteren Redundanzfilter 34 zugeführt, der die weiteren Datenpakete 24 vor dem Versenden an den Server-Rechner 8 über den geostationären Satelliten 6 auf redundante Daten 24, hin untersucht und die ermittelten redundanten Daten 24, aus den weiteren Datenpaketen 24 entfernt, oder - falls für die jeweilige Anwendung sinnvoll - durch im Client-Rechner 12 vorgehaltene Daten, die vom Server-Rechner 8 insbesondere zur Aufrechterhaltung der Netzwerkverbindung zwischen dem Client-Rechner 12 und dem Server-Rechner 8 benötigt werden, ersetzt.

Der weitere Redundanzfilter 34 kann dabei entweder hardwaremäßig durch eine Hardwareeinrichtung des Client-Rechners 12 oder aber auch softwaremäßig durch ein auf dem Client-Rechner 12 laufendes Datenverarbeitungsprogramm realisiert sein, welches im Falle des Einsatzes von "Windows 2000 Server" als Betriebssystem an dem als "Winsocket" bezeichneten Bereich des Betriebssystems des Client-Rechners 12 eingreift.

Im Anschluss daran werden die um die redundanten Daten 24, bereinigten weiteren Datenpakete 24 einer clientseitigen Einheit 36 zur Optimierung der PaketgröBe zugeführt, welche die weiteren Datenpakete 24 zu größeren weiteren Datenpakten 24ₘ zusammenfasst, deren Länge der maximal ohne eine Fragmentierung über das Netzwerk 1 übertragbaren Paketlänge (MTU) entspricht.

Die in dieser Weise optimierten weiteren Datenpakete 24ₘ werden anschließend einem weiteren Protokoll-Konverter 38 zugeführt, der vorzugsweise ebenfalls softwaremäßig im Client-Rechner 12 realisiert ist, und der die dem TCP-Standard entsprechenden weiteren Datenpakete optimierter Länge 24ₘ in der Weise konvertiert, dass diese nach der Konvertierung den Erfordernissen des UDP-Netzwerkübertragungsprotokolls genügen und die darin enthaltenen Rückbestätigungen, bzw. die Aufforderungen zur Übersendung von Rückbestätigungen eliminiert oder zumindest neutralisiert sind. Die konvertierten weiteren Datenpakete 24_{mUDP} optimierter Länge werden anschließend an die clientseitige Bodenstation 4 weitergeleitet und von dort aus über den geostationären Satelliten 6 an die serverseitige Bodenstation 2 übertragen, von wo aus sie vorzugsweise ohne weitere Konvertierung dem Server-Rechner 12 zugeführt werden. Der Server-Rechner 12 übernimmt diese optimierten und konvertierten weiteren Datenpakete 24_{mUDP} vorzugsweise unmittelbar ohne eine vorherige Rückkonvertierung in TCP-konforme Pakete, und übergibt die darin enthaltenen weiteren Daten an das Datenverarbeitungsprogramm 10.

Die zuvor beschriebenen Manipulationen der Datenpakete 20 und weiteren Datenpakete 24 durch die Redundanzfilter 28, 34, die Einheiten 30 und 36 zur Optimierung der Paketlänge, sowie die TCP-UDP-Konverter 32 und 38 werden bei der bevorzugten Ausführungsform der Erfindung vorzugsweise durch ein entsprechendes Softwareprogramm realisiert, welches z. B. auf einem mobilen Datenträger 40 in Form einer CD-Rom transportiert und auf die jeweiligen Festplatten des Server-Rechners 8 und/oder des Client-Rechners 12 zur Ausführung aufgespielt werden kann. Die softwaremäßige Realisierung auf dem Server-Rechner 8 bzw. auf dem Client-Rechner 12 ist in Fig. 1 durch die punktierte Darstellung angedeutet.

### Liste der Bezugszeichen

- 1: Satellitennetzwerk
- 2: serverseitige Bodenstation
- 4: clientseitige Bodenstation
- 6: geostationärer Satellit
- 8: Server-Rechner,
- 10: Datenverarbeitungsprogramm auf Server-Rechner
- 12: Client-Rechner
- 14: Monitor
- 16: Tastatur
- 18: Maus
- 20: Datenpakete, die von Server-Rechner erzeugt werden
- 20,: redundante Daten in Datenpaketen
- 20ₘ: Datenpakete optimierter Länge
- 20_{mUDP}: Datenpakete nach Konvertierung, die UDP-Standard genügen
- 22: Eingabeaufforderung
- 24: weitere Datenpakete
- 24ᵣ: redundante Daten in den weiteren Datenpaketen
- 24ₘ: weitere Datenpakete optimierter Länge
- 24_{mUDP}: weitere Datenpakete nach Konvertierung, die UDP-Standard genügen
- 26: interaktives Anwenderprogramm auf Client-Rechner
- 28: Redundanzfilter für Datenpakte
- 30: serverseitige Einheit zur Optimierung der Paketlänge
- 32: Protokoll-Konverter
- 34: weiterer Redundanzfilter
- 36: clientseitige Einheit zur Optimierung der Paketlänge
- 38: weiterer Protokoll-Konverter
- 40: Datenträger mit Softwareprogramm

## Patentansprüche

1. Verfahren zur Reduzierung der Latenzzeit bei der interaktiven Datenkommunikation zwischen einem Client-Rechner (12) und einem Server-Rechner (8), die über ein einen geostationären Satelliten (6) enthaltendes Satellitennetzwerk (1) miteinander verbunden sind, wobei auf dem Server-Rechner (8) ein Datenverarbeitungsprogramm (10) ausgeführt wird, welches Daten erzeugt, die in Form von Datenpaketen (20, 20ₘ, 20_{mUDP}) auf den Client-Rechner (12) übertragen und von diesem über ein mit dem Client-Rechner (12) verbundenes Anzeigemedium (14) in Form eines interaktiven Anwenderprogramms (26) dargestellt werden, und wobei dem Bediener des Client Rechners (12) durch eine vom Anwenderprogramm (26) dargestellte Eingabeaufforderung (22) die Eingabe von weiteren Daten signalisiert wird, die in Form von weiteren Datenpaketen (24, 24ₘ, 24_{mUDP}) über das Satellitennetzwerk (1) an den Server-Rechner (8) übersandt werden,
**dadurch gekennzeichnet, dass**
- der Aufbau der Netzwerkverbindung durch Übertragung eines weiteren Datenpakets veranlasst wird, das zur Übertragung nach dem TCP-Netzwerkübertragungsprotokoll erzeugt wurde,
- das anschließende Übersenden der weiteren Datenpakete (24, 24ₘ, 24_{mUDP}) vom Client-Rechner (12) an den Server-Rechner (8) im Wesentlichen ohne eine Rückbestätigung des Empfangs der übersandten weiteren Datenpakete (24, 24ₘ, 24_{mUDP}) durch den Server Rechner (8) erfolgt, und
- der Abschluss der Übertragung der weiteren Datenpakete (24, 24ₘ, 24_{mUDP}) durch Übertragung eines weiteren Datenpakets veranlasst wird, das zur Übertragung in Übereinstimmung mit dem TCP-Netzwerkprotokoll erzeugt wurde.

2. Verfahren, nach Anspruch 1, **dadurch gekennzeichnet, dass**
das Übersenden der Datenpakete (20, 20ₘ, 20_{mUDP}) vom Server-Rechner (8) an den Client-Rechner (12) im Wesentlichen ohne eine Rückbestätigung des Empfangs der übersandten Datenpakete (20, 20ₘ, 20_{mUDP}) durch den Client-Rechner (12) erfolgt.

3. Verfahren nach einem der vorhergehenden Ansprüche,
**dadurch gekennzeichnet,**
**dass** die Datenpakete (20, 20ₘ, 20_{mUDP}) und/oder die weiteren Datenpakete (24, 24ₘ, 24_{mUDP}) über den geostationären Satelliten (6) in Übereinstimmung mit dem UDP-Netzwerkübertragungsprotokoll übertragen werden.

4. Verfahren nach Anspruch 3, **dadurch gekennzeichnet, dass**
die in Übereinstimmung mit dem UDP-Netzwerkübertragungsprotokoll übertragenen Datenpakete(20_{mUDP}) und/oder weiteren Datenpakete (24_{mUDP}) durch Konvertierung aus Datenpaketen und/oder weiteren Datenpaketen generiert werden, die zur Übertragung gemäß dem TCP-Netzwerkübertragungsprotokoll erzeugt wurden.

5. Verfahren nach einem der vorhergehenden Ansprüche,
**dadurch gekennzeichnet, dass**
die weiteren Datenpakete (24) vor dem Versenden an den Server-Rechner auf redundante Daten (24ᵣ) hin untersucht und ermittelte redundante Daten (24ᵣ) aus den weiteren Datenpaketen (24) entfernt oder durch bereits eingegeben Daten ersetzt werden.

6. Verfahren nach Anspruch 5, **dadurch gekennzeichnet, dass**
das Entfernen der redundanten Daten (24ᵣ) aus den weiteren Datenpakten (24ᵣ) hardwaremäßig durch eine Hardwareeinrichtung des Client-Rechners (8) erfolgt.

7. Verfahren nach Anspruch 5, **dadurch gekennzeichnet, dass**
das Entfernen der redundanten Daten (24ᵣ) aus den weiteren Datenpakten softwaremäßig durch ein auf dem Client-Rechner (12) laufendes Datenverarbeitungsprogramm erfolgt.

8. Verfahren nach Anspruch 7, **dadurch gekennzeichnet, dass**
die redundanten Daten (24ᵣ) in den weiteren Datenpaketen vom Client-Rechner (12) übersandte, sich periodisch wiederholende Teile von Daten umfassen, insbesondere Teile von Daten, die die Aufrechterhaltung der Netzwerkverbindung zwischen dem Client-Rechner (12) und dem Server-Rechner (8) gewährleisten.

9. Verfahren nach Anspruch 8, **dadurch gekennzeichnet, dass**
die sich periodisch wiederholenden Teile von Daten durch den Server-Rechner (8) selbständig erzeugt werden, ohne dass diese vom Client-Rechner (12) tatsächlich übersandt wurden.

10. Verfahren nach einem der vorhergehenden Ansprüche,
**dadurch gekennzeichnet, dass**
die vom Server-Rechner (8) erzeugten Datenpakete (20) vor dem Versenden an den Client-Rechner auf redundante Daten (20ᵣ) hin untersucht und ermittelte redundante Daten (20ᵣ) aus den Datenpaketen entfernt oder durch im Server-Rechner (8) vorgehaltene Daten ersetzt werden.

11. Verfahren nach Anspruch 5, **dadurch gekennzeichnet, dass** das Entfernen der redundanten Daten (20ᵣ) aus den Datenpakten (20) hardwaremäßig durch eine Hardwareeinrichtung des Server-Rechners (8) erfolgt.

12. Verfahren nach Anspruch 5, **dadurch gekennzeichnet, dass** das Entfernen der redundanten Daten (20ᵣ) aus den Datenpakten (20) softwaremäßig durch ein auf dem Server-Rechner (8) laufendes Datenverarbeitungsprogramm erfolgt.

13. Verfahren nach Anspruch 7, **dadurch gekennzeichnet, dass** die redundanten Daten (20ᵣ) in den vom Server-Rechner (8) übersandten Datenpaketen (20) sich periodisch wiederholende Teile von Daten umfassen, insbesondere vom interaktiven Anwenderprogramm (26) zur interaktiven Darstellung auf dem Anzeigemedium verwendete Blinkdarstellungen von Eingabeaufforderungen (22) und/oder Teile von Daten in den Datenpaketen (20), die vom Client-Rechner (12) zur Aufrechterhaltung der Netzwerkverbindung zwischen dem Client-Rechner (12) und dem Server-Rechner (8) benötigt werden.

14. Verfahren nach Anspruch 8, **dadurch gekennzeichnet, dass** die aus den vom Server-Rechner (8) übersandten Datenpaketen (20) entfernten, sich periodisch wiederholenden Teile von Daten (20r) durch den Client-Rechner (12) selbständig erzeugt werden, ohne dass diese vom Server-Rechner (8) tatsächlich übersandt wurden.

15. Verfahren nach einem der vorhergehenden Ansprüche,
**dadurch gekennzeichnet, dass**
der Client-Rechner (12) Mittel aufweist, welche häufig wiederkehrende Datenfolgen in den Datenpaketen (20) ermitteln, eine Kopie dieser häufig wiederkehrenden Datenfolgen oder eine diesen Datenfolgen entsprechende Bilddarstellung in einem Speicher des Client-Rechners (12) ablegen und anstelle der wiederkehrenden Datenfolgen die im Speicher abgelegte Kopie der Datenfolgen oder die Bilddarstellung zur Darstellung auf dem Anzeigemedium (14) bringen.

16. Verfahren nach einem der vorhergehenden Ansprüche,
**dadurch gekennzeichnet, dass**
mehrere der zwischen dem Server-Rechner (8) und dem Client-Rechner (12) über den geostationären Satelliten (6) zu übertragenden Datenpakete (20) und/oder weiteren Datenpakete (24) zur größeren Datenpaketen (20ₘ) und/oder größeren weiteren Datenpaketen (24ₘ) zusammengefasst werden.

17. Verfahren nach Anspruch 16, **dadurch gekennzeichnet, dass**
die zusammengefassten größeren Datenpakete (20ₘ) und/oder die zusammengefassten größeren weiteren Datenpakete (24ₘ) eine optimierte Größe aufweisen, derart, dass eine Übertragung über den geostationären Satelliten (6) ohne eine Fragmentierung der Datenpakete erfolgt.

18. Verfahren nach Anspruch 17, **dadurch gekennzeichnet, dass**
die optimierte Größe der größeren Datenpakete (20ₘ) und/oder der größeren weiteren Datenpakete (24ₘ) durch den Server-Rechner (8) bei der Einrichtung des Satellitennetzwerks (1) für die jeweilige Verbindung zum Client-Rechner (12) auf der Basis von verbindungsspezifischen Parametern bestimmt wird.

19. Verfahren nach Anspruch 17, **dadurch gekennzeichnet, dass**
die optimierte Größe der größeren Datenpakete (20ₘ) und/oder der größeren weiteren Datenpakete (24ₘ) durch den Server-Rechner (8) während des Datenaustauschs zwischen dem Client-Rechner (12) und dem Server-Rechner (8) für die jeweilige Verbindung zum Client-Rechner (12) auf der Basis von verbindungsspezifischen Parametern bestimmt wird.

20. Satellitennetzwerk (1) zur Durchführung des Verfahrens nach einem der vorhergehenden Ansprüche, umfassend einen über einen geostationären Satelliten (6) mit einem Client-Rechner (12) verbundenen Server-Rechner (8), wobei auf dem Server-Rechner (8) ein Datenverarbeitungsprogramm (10) ausgeführt wird, welches Daten erzeugt, die in Form von Datenpaketen (20, 20ₘ, 20_{mUDP}) auf den Client Rechner (12) übertragen und von diesem über ein mit dem Client-Rechner verbundenes Anzeigemedium (14) in Form eines interaktiven Anwenderprogramms (26) dargestellt werden, und wobei dem Bediener des Client-Rechners (12) durch eine vom Anwenderprogramm (26) dargestellte Eingabeaufforderung (22) die Eingabe von weiteren Daten signalisiert wird, die in Form von weiteren Datenpaketen (24, 24ₘ,24_{mUDP}) über das Satellitennetzwerk (1) an den Server-Rechner (8) übersandt werden,
**dadurch gekennzeichnet, dass**
- der Aufbau der Netzwerkverbindung durch Übertragung eines weiteren Datenpakets veranlasst wird, das zur Übertragung nach dem TCP-Netzwerkübertragungsprotokoll erzeugt wurde,
- das anschließende Übersenden der weiteren Datenpakete (24, 24ₘ, 24_{mUDP}) vom Client-Rechner (12) an den Server-Rechner (8) im Wesentlichen ohne eine Rückbestätigung des Empfangs der übersandten weiteren Datenpakete (24, 24ₘ, 24_{mUDP}) durch den Server Rechner (8) erfolgt, und
- der Abschluss der Übertragung der weiteren Datenpakete (24, 24ₘ, 24_{mUDP}) durch Übertragung eines weiteren Datenpakets veranlasst wird, das zur Übertragung in Übereinstimmung mit dem TCP-Netzwerkprotokoll erzeugt wurde.

21. Satellitennetzwerk nach Anspruch 21,
**dadurch gekennzeichnet, dass**
das Übersenden der Datenpakete (20, 20ₘ, 20_{mUDP}) vom Server-Rechner (8) an den Client-Rechner (12) im Wesentlichen ohne eine Rückbestätigung des Empfangs der übersandten Datenpakete (20, 20ₘ, 20_{mUDP}) durch den Client-Rechner (12) erfolgt.

22. Datenträger mit einem Softwareprogramm zur Reduzierung der Latenzzeit bei der interaktiven Datenkommunikation zwischen einem Client-Rechner (12) und einem Server-Rechner (8), die über ein einen geostationären Satelliten (6) enthaltendes Satellitennetzwerk) miteinander verbunden sind, wobei auf dem Server Rechner (8) ein Datenverarbeitungsprogramm (10) ausgeführt wird, welches Daten erzeugt, die in Form von Datenpaketen (20, 20ₘ, 20_{mUDP}) auf den Client-Rechner übertragen und von diesem über ein mit dem Client-Rechner (12) verbundenes Anzeigemedium (14) in Form eines interaktiven Anwenderprogramms (26) dargestellt werden, und wobei dem Bediener des Client-Rechners durch eine vom Anwenderprogramm (26) dargestellte Eingabeaufforderung (22) die Eingabe von weiteren Daten signalisiert wird, die in Form von weiteren Datenpaketen (24, 24ₘ, 24_{mUDP}) über das Satellitennetzwerk (1) an den Server-Rechner (8) übersandt werden,
**gekennzeichnet, durch**
einen Programmcoder, der
- der zum Aufbau der Netzwerkverbindung die Übertragung eines weiteren Datenpakets veranlasst, das zur Übertragung nach dem TCP-Netzwerkübertragungsprotokoll erzeugt wurde,
- das anschließende Übersenden der weiteren Datenpakete (24, 24ₘ, 24_{mUDP}) vom Client-Rechner (12) an den Server-Rechner (8) im Wesentlichen ohne eine Rückbestätigung des Empfangs der übersandten weiteren Datenpakete (24, 24ₘ, 24_{mUDP}) **durch** den Server Rechner (8) durchführt indem der Programmcode die vom Client-Rechner (12) während der Darstellung des interaktiven Anwenderprogramms (26) oder der Eingabe von Daten erzeugten, an den Server-Rechner (8) zu übersendenden Aufforderungen zu Rückbestätigungen des Empfang der weiteren Datenpakete (24, 24ₘ, 24_{mUDP}) im Wesentlichen vollständig aus den weiteren Datenpaketen (24, 24ₘ, 24_{mUDP}) entfernt, bevor diese an den Server-Rechner (8) übersandt werden, und
- der zum Abschluss der Übertragung der weiteren Datenpakete (24, 24ₘ, 24_{mUDP}) eine Übertragung eines weiteren Datenpakets veranlasst, das zur Übertragung in Übereinstimmung mit dem TCP-Netzwerkprotokoll erzeugt wurde.

23. Datenträger nach Anspruch 22,
**gekennzeichnet, durch**
einen Programmcode, der die vom Datenverarbeitungsprogramm (10) des Server-Rechners (8) während der Darstellung des interaktiven Anwenderprogramms (26) erzeugten, an den Client-Rechner (12) zu übersendenden Aufforderungen zu Rückbestätigungen des Empfang der Datenpakete (20, 20ₘ 20_{mUDP}) im Wesentlichen vollständig aus den Datenpaketen (20, 20ₘ 20_{mUDP}) entfernt, bevor diese an den Client-Rechner (12) übersandt werden.

## Claims

1. A method for reducing the latency in interactive data communication between a client computer (12) and a server computer (8) which are connected with each other via a satellite network (1) containing a geostationary satellite (6), with a data processing program (10) being executed on the server computer (8), which program generates data which are transmitted in form of data packets (20, 20ₘ, 20_{mUDP}) to the client computer (12) and are displayed by the same via a display medium (14) in form of an interactive application program (26), which display medium is connected with the client computer (12), and with the user of the client computer (12) being signalled to provide the input of further data by an input prompt (22) shown by the application program (26), which further data are sent in form of further data packets (24, 24ₘ, 24_{mUDP}) via the satellite network (1) to the server computer (8), **characterized in that**
- the establishment of the network connection is initiated by the transmission of a further data packet which was generated for the transmission according to the TCP network transmission protocol;
- the subsequent transmission of the further data packets (24, 24ₘ, 24_{mUDP}) from the client computer (12) to the server computer (8) occurs substantially without return confirmation of the receipt of the transmitted further data packets (24, 24ₘ, 24_{mUDP}) by the server computer (8), and
- the completion of the transmission of the further data packets (24, 24ₘ, 24_{mUDP}) is initiated by transmission of a further data packet which was generated for transmission in agreement with the TCP network protocol.

2. A method according to claim 1, **characterized in that** the transmission of the data packets (20, 20ₘ, 20_{mUDP}) from the server computer (8) to the client computer (12) occurs substantially without any return confirmation of the receipt of the transmitted data packets (20, 20ₘ, 20_{mUDP}) by the client computer (12).

3. A method according to one of the preceding claims, **characterized in that** the data packets (20, 20ₘ, 20_{mUDP}) and/or the further data packets (24, 24ₘ, 24_{mUDP}) are transmitted via the geostationary satellite (6) in agreement with the UDP network transmission protocol.

4. A method according to claim 3, **characterized in that** the data packets (20_{mUDP}) and/or further data packets (24_{mUDP}) transmitted in agreement with the UDP network protocol are generated by conversion from data packets and/or further data packets which were generated for transmission according to the TCP network transmission protocol.

5. A method according to one of the preceding claims, **characterized in that** the further data packets (24) are examined with respect to redundant data (24ᵣ) before transmission to the server computer and determined redundant data (24) are removed from the further data packets (24) or are replaced by data already entered.

6. A method according to claim 5, **characterized in that** the removal of the redundant data (24ᵣ) from the further data packets (24ᵣ) occurs by means of hardware by a hardware device of the client computer (8).

7. A method according to claim 5, **characterized in that** the removal of the redundant data (24ᵣ) from the further data packets occurs by means of software by a data processing program running on the client computer (12).

8. A method according to claim 7, **characterized in that** the redundant data (24ᵣ) in the further data packets comprise periodically repeating parts of data sent by the client computer (12), especially parts of data which ensure maintaining the network connection between the client computer (12) and the server computer (8).

9. A method according to claim 8, **characterized in that** periodically repeating parts of data are generated automatically by the server computer (8) without such data being actually transmitted by the client computer (12).

10. A method according to one of the preceding claims, **characterized in that** the data packets (20) generated by the server computer (8) are examined for redundant data (20ᵣ) before transmission to the client computer, and determined redundant data (20ᵣ) are removed from the data packets or are replaced by data kept in the server computer (8).

11. A method according to claim 5, **characterized in that** the removal of the redundant data (20ᵣ) from the data packets (20) occurs by means of hardware by a hardware device of the server computer (8).

12. A method according to claim 5, **characterized in that** the removal of the redundant data (20ᵣ) from the data packets occurs by means of software by a data processing program running on the server computer (8).

13. A method according to claim 7, **characterized in that** the redundant data (20ᵣ) in the data packets (20) transmitted by the server computer (8) comprise periodically repeating parts of data, especially blinking illustrations of input prompts (22) used especially by the interactive application program (26) for interactive display on the display medium, and/or parts of data in the data packets (20) which are required by the client computer (12) for maintaining the network connection between the client computer (12) and the server computer (8).

14. A method according to claim 8, **characterized in that** the periodically repeating parts of data (20ᵣ) which are removed from the data packets (20) transmitted by the server computer (8) are generated automatically by the client computer (12) without such data having been actually sent by the server computer (8).

15. A method according to one of the preceding claims, **characterized in that** the client computer (12) comprises means which determine frequently repeating data sequences in the data packets (20), which save a copy of these frequently repeating data sequences or an illustration of an image corresponding to these data sequences in a memory of the client computer (12), and display on the display medium (14) a copy of the data sequences or the illustration of the image stored in the memory instead of the repeating data sequences.

16. A method according to one of the preceding claims, **characterized in that** several data packets (20) and/or further data packets (24) which are to be transmitted between the server computer (8) and the client computer (12) via the geostationary satellite (6) are combined into larger data packets (20ₘ) and/or larger further data packets (24ₘ).

17. A method according to claim 16, **characterized in that** the combined larger data packets (20ₘ) and/or combined larger further data packets (24ₘ) have an optimized size, such that a transmission via the geostationary satellite (6) occurs without any fragmentation of the data packets.

18. A method according to claim 17, **characterized in that** the optimized size of the larger data packets (20ₘ) and/or the larger further data packets (24ₘ) is determined by the server computer (8) during the establishment of the satellite network (1) for the respective connection to the client computer (12) on the basis of connection-specific parameters.

19. A method according to claim 17, **characterized in that** the optimized size of the larger data packets (20ₘ) and/or the larger further data packets (24ₘ) is determined by the server computer (8) during the data exchange between the client computer (12) and the server computer (8) for the respective connection to the client computer (12) on the basis of connection-specific parameters.

20. A satellite network (1) for performing the method according to one of the preceding claims, comprising a server computer (8) which is connected with a client computer (12) via a geostationary satellite (6), with a data processing program (10) being executed on the server computer (8), which program generates data which are transmitted in form of data packets (20, 20ₘ, 20_{mUDP}) to the client computer and are displayed by said computer via a display medium (14) which is connected to the client computer and provided in form of an interactive application program (26), and with the user of the client computer (12) being signalled to provide the input of further data by an input prompt (22) displayed by the application program (26), which further data are transmitted in form of further data packets (24, 24ₘ, 24_{mUDP}) via the satellite network (1) to the server computer (8), **characterized in that**
- the establishment of the network connection is initiated by the transmission of a further data packet which was generated for the transmission according to the TCP network transmission protocol;
- the subsequent transmission of the further data packets (24, 24ₘ, 24_{mUDP}) from the client computer (12) to the server computer (8) occurs substantially without return confirmation of the receipt of the transmitted further data packets (24, 24ₘ, 24_{mUDP}) by the server computer (8), and
- the completion of the transmission of the further data packets (24, 24ₘ, 24_{mUDP}) is initiated by transmission of a further data packet which was generated for transmission in agreement with the TCP network protocol.

21. A satellite network according to claim 21, **characterized in that** the transmission
of the data packets (20, 20ₘ, 20_{mUDP}) from the server computer (8) to the client computer (12) occurs substantially without any return confirmation of the receipt of the transmitted data packets (20, 20ₘ, 20_{mUDP}) by the client computer (12).

22. A data medium with a software program for reducing the latency in interactive data communication between a client computer (12) and a server computer (8) which are connected with each other via a satellite network (1) containing a geostationary satellite (6), with a data processing program (10) being executed on the server computer (8), which program generates data which are transmitted in form of data packets (20, 20ₘ, 20_{mUDP}) to the client computer (12) and are displayed by the same via a display medium (14) in form of an interactive application program (26), which display medium is connected with the client computer (12), and with the user of the client computer being signalled the input of further data by an input prompt (22) displayed by the application program (26), which further data are sent in form of further data packets (24, 24ₘ, 24_{mUDP}) via the satellite network (1) to the server computer (8), **characterized by** a program encoder
- which, for the purpose of establishing the network connection, initiates the transmission of a further data packet which was generated for the transmission according to the TCP network transmission protocol;
- which performs the subsequent transmission of the further data packets (24, 24ₘ, 24_{mUDP}) from the client computer (12) to the server computer (8) substantially without return confirmation of the receipt of the transmitted further data packets (24, 24ₘ, 24_{mUDP}) by the server computer (8), in that the program code removes the requests for return confirmations of the receipt of the further data packets (24, 24ₘ, 24_{mUDP}) substantially completely from the further data packets (24, 24ₘ, 24_{mUDP}) before they are sent to the server computer (8), which requests are generated by the client computer (12) during the display of the interactive application program (26) or during the input of data and are to be sent to the server computer (8);
- which initiates the transmission of a further data packet for completing the transmission of the further data packets (24, 24ₘ, 24_{muDP}), which further data packet was generated for transmission in agreement with the TCP network protocol.

23. A data medium according to claim 22, **characterized by** a program code which removes the requests for return confirmations of the receipt of the data packets (20, 20ₘ, 20_{muDP}) substantially completely from the further packets (20, 20ₘ, 20_{mUDP}) before they are sent to the client computer (12), which requests are generated by the server computer (8) during the display of the interactive application program (26) and are to be sent to the client computer (12).

## Revendications

1. Procédé pour réduire le temps de latence lors de la communication interactive de données entre un ordinateur client (12) et un ordinateur serveur (8) qui sont mis en communication par un réseau satellitaire (1) comprenant un satellite géostationnaire (6), l'ordinateur serveur (8) exécutant un programme de traitement de données (10) qui crée des données qui sont transmises sous forme de paquets de données (20, 20ₘ, 20_{mUDP}) à l'ordinateur client (12) et sont affichées par celui-ci, à l'aide d'un support d'affichage (14) relié à l'ordinateur client (12), sous la forme d'un programme applicatif interactif (26), et dans lequel une invite de saisie (22) affichée par le programme applicatif (26) signale à l'utilisateur de l'ordinateur client (12) l'entrée d'autres données qui sont transmises sous la forme d'autres paquets de données (24, 24ₘ, 24_{mUDP}) à l'ordinateur serveur (8) sur le réseau satellitaire (1),
**caractérisé en ce que**
- l'établissement de la communication dans le réseau est demandé par la transmission d'un autre paquet de données qui a été créé en vue de sa transmission selon le protocole de transmission en réseau TCP,
- la transmission qui suit des autres paquets de données (24, 24ₘ, 24_{mUDP}) de l'ordinateur client (12) à l'ordinateur serveur (8) s'effectue pour l'essentiel sans confirmation en retour par l'ordinateur serveur (8) de la réception des autres paquets de données (24, 24ₘ, 24_{mUDP}) transmis, et
- la fin de la transmission des autres paquets de données (24, 24ₘ, 24_{mUDP}) est provoquée par la transmission d'un autre paquet de données qui est créé en vue de sa transmission selon le protocole de réseau TCP.

2. Procédé selon la revendication 1, **caractérisé en ce que** la transmission des paquets de données (20, 20ₘ, 20_{muDP}) de l'ordinateur serveur (8) à l'ordinateur client (12) s'effectue pour l'essentiel sans confirmation en retour par l'ordinateur client (12) de la réception des paquets de données transmis (20, 20ₘ, 20_{mUDP}).

3. Procédé selon l'une des revendications précédentes, **caractérisé en ce que** les paquets de données (20, 20ₘ, 20_{mUDP}) et/ou les autres paquets de données (24, 24ₘ, 24_{mUDP}) sont transmis par le satellite géostationnaire (6) selon le protocole de transmission en réseau UDP.

4. Procédé selon la revendication 3, **caractérisé en ce que** les paquets de données (20_{mUDP}) et/ou les autres paquets de données (24_{mUDP}) transmis selon le protocole de transmission en réseau UDP sont générés par conversion à partir de paquets de données et/ou d'autres paquets de données créés en vue de leur transmission selon le protocole de transmission en réseau TCP.

5. Procédé selon l'une des revendications précédentes, **caractérisé en ce que** les autres paquets de données (24) sont examinés avant l'envoi à l'ordinateur serveur pour rechercher les données redondantes (24ᵣ) et les données redondantes (24ᵣ) trouvées sont éliminées des autres paquets de données (24) ou remplacées par des données déjà entrées.

6. Procédé selon la revendication 5, **caractérisé en ce que** l'élimination des données redondantes (24ᵣ) dans les autres paquets de données (24ᵣ) est effectuée au niveau matériel par un dispositif matériel de l'ordinateur client (8).

7. Procédé selon la revendication 5, **caractérisé en ce que** la suppression des données redondantes (24ᵣ) dans les autres paquets de données est réalisée au niveau logiciel par un programme de traitement de données exécuté sur l'ordinateur client (12).

8. Procédé selon la revendication 7, **caractérisé en ce que** les données redondantes (24ᵣ) comprennent des parties de données transmises dans les autres paquets de données par l'ordinateur client (12) et qui se répètent périodiquement, en particulier des parties de données garantissant le maintien de la communication dans le réseau entre l'ordinateur client (12) et l'ordinateur serveur (8).

9. Procédé selon la revendication 8, **caractérisé en ce que** les parties de données se répétant périodiquement sont créées de façon autonome par ordinateur serveur (8) sans avoir effectivement été transmises par l'ordinateur client (12).

10. Procédé selon l'une des revendications précédentes, **caractérisé en ce que** les paquets de données (20) créés par l'ordinateur serveur (8) sont examinés avant l'envoi à l'ordinateur client pour rechercher les données redondantes (20ᵣ) et les données redondantes (20ᵣ) sont supprimées des paquets de données ou remplacées par des données conservées en réserve dans l'ordinateur serveur (8).

11. Procédé selon la revendication 5, **caractérisé en ce que** la suppression des données redondantes (20ᵣ) dans les paquets de données (20) est réalisée au niveau matériel par un dispositif matériel de l'ordinateur serveur (8).

12. Procédé selon la revendication 5, **caractérisé en ce que** la suppression des données redondantes (20ᵣ) des paquets de données (20) est exécutée au niveau logiciel par un programme de traitement de données exécuté sur l'ordinateur serveur (8).

13. Procédé selon la revendication 7, **caractérisé en ce que** les données redondantes (20ᵣ) comprennent des parties de données qui se répètent périodiquement dans les paquets de données (20) transmis par l'ordinateur serveur (8), en particulier des affichages clignotants d'invites de saisie (22) utilisées par le programme applicatif interactif (26) pour l'affichage interactif sur le support d'affichage et/ou des parties de données dans les paquets de données (20) dont l'ordinateur client (12) a besoin pour maintenir la communication en réseau entre l'ordinateur client (12) et l'ordinateur serveur (8).

14. Procédé selon la revendication 8, **caractérisé en ce que** les parties de données se répétant périodiquement (20ᵣ) supprimées des paquets de données (20) transmis par l'ordinateur serveur (8) sont créées de façon autonome par l'ordinateur client (12) sans avoir été effectivement transmises par l'ordinateur serveur (8).

15. Procédé selon l'une des revendications précédentes, **caractérisé en ce que** l'ordinateur client (12) présente des moyens qui déterminent les séquences de données se répétant fréquemment dans les paquets de données (20), enregistrent une copie de ces séquences de données se répétant fréquemment ou une image correspondant à ces séquences de données dans une mémoire de l'ordinateur client (12) et affichent sur le support d'affichage (14), à la place des séquences de données répétitives, la copie des séquences de données ou l'image enregistrée dans la mémoire.

16. Procédé selon l'une des revendications précédentes, **caractérisé en ce que** plusieurs des paquets de données (20) et/ou des autres paquets de données (24) devant être transmis entre l'ordinateur serveur (8) et l'ordinateur client (12) via le satellite géostationnaire (6) sont regroupés en plus gros paquets de données (20ₘ) et/ou en plus gros autres paquets de données (24ₘ).

17. Procédé selon la revendication 16, **caractérisé en ce que** les plus gros paquets de données regroupés (20ₘ) et/ou les plus gros autres paquets de données regroupés (24ₘ) ont une taille optimisée de telle façon que leur transmission via le satellite géostationnaire (6) s'effectue sans fragmentation des paquets de données.

18. Procédé selon la revendication 17, **caractérisé en ce que** la taille optimisée des plus gros paquets de données (20ₘ) et/ou des plus gros autres paquets de données (24ₘ) est déterminée par l'ordinateur serveur (8) lors de l'établissement du réseau satellitaire (1) pour chaque communication avec l'ordinateur client (12) sur la base de paramètres spécifiques de la communication.

19. Procédé selon la revendication 17, **caractérisé en ce que** la taille optimisée des plus gros paquets de données (20ₘ) et/ou des plus gros autres paquets de données (24ₘ) est détemrinée par l'ordinateur serveur (8) pendant l'échange de données entre l'ordinateur client (12) et l'ordinateur serveur (8) pour la communication en question avec l'ordinateur client (12) sur la base de paramètres spécifiques de la communication.

20. Réseau satellitaire (1) pour la mise en oeuvre du procédé selon l'une des revendications précédentes, comprenant un ordinateur serveur (8) communiquant avec un ordinateur client (12) par l'intermédiaire d'un satellite géostationnaire (6), dans lequel un programme de traitement de données (10) est exécuté sur l'ordinateur serveur (8) et produit des données qui sont transmises sous forme de paquets de données (20, 20ₘ, 20_{mUDP}) à l'ordinateur client (12) et présentées par celui-ci à l'aide d'un support d'affichage (14) relié à l'ordinateur client sous la forme d'un programme applicatif interactif (26), et dans lequel une invite de saisie (22) affichée par le programme applicatif (26) signale à l'utilisateur de l'ordinateur client (12) l'entrée d'autres données qui sont transmises sous forme d'autres paquets de données (24, 24ₘ, 24_{mUDP}) à l'ordinateur serveur (8) via le réseau satellitaire (1),
**caractérisé en ce que**
- l'établissement de la communication dans le réseau est demandé par la transmission d'un autre paquet de données qui a été créé en vue de sa transmission selon le protocole de transmission en réseau TCP,
- la transmission qui suit des autres paquets de données (24, 24ₘ, 24_{mUDP}) de l'ordinateur client (12) à l'ordinateur serveur (8) s'effectue pour l'essentiel sans confirmation en retour par l'ordinateur serveur (8) de la réception des autres paquets de données (24, 24ₘ, 24_{mUDP}) transmis, et
- la fin de la transmission des autres paquets de données (24, 24ₘ, 24_{mUDP}) est provoquée par la transmission d'un autre paquet de données qui est créé en vue de sa transmission selon le protocole de réseau TCP.

21. Réseau satellitaire selon la revendication 21, **caractérisé en ce que** la transmission des paquets de données (20, 20ₘ, 20_{mUDP}) de l'ordinateur serveur (8) à l'ordinateur client (12) s'effectue pour l'essentiel sans confirmation en retour par l'ordinateur client (12) de la réception des paquets de données transmis (20, 20ₘ, 20_{mUDP})·

22. Support de données avec un programme logiciel pour la réduction du temps de latence dans la communication interactive de données entre un ordinateur client (12) et un ordinateur serveur (8) qui communiquent l'un avec l'autre par l'intermédiaire d'un réseau satellitaire contenant un satellite géostationnaire (6), dans lequel est exécuté sur l'ordinateur serveur (8) un programme de traitement de données (10) qui produit des données qui sont transmises sous forme de paquets de données (20, 20ₘ, 20_{mUDP}) à l'ordinateur client et sont présentées par celui-ci à l'aide d'un support d'affichage (14) relié à l'ordinateur client (12) sous la forme d'un programme applicatif interactif (26), et dans lequel une invite de saisie (22) affichée par le programme applicatif (26) signale à l'utilisateur de l'ordinateur client (12) l'entrée d'autres données qui sont transmises sous forme d'autres paquets de données (24, 24ₘ, 24_{mUDP}) à l'ordinateur serveur (8) via le réseau satellitaire (1),
**caractérisé en ce qu'**il comporte un codeur de programme qui
- provoque pour établir la communication dans le réseau la transmission d'un autre paquet de données qui a été créé en vue de sa transmission selon le protocole de transmission en réseau TCP,
- exécute ensuite la transmission des autres paquets de données (24, 24ₘ, 24_{mUDP}) de l'ordinateur client (12) à l'ordinateur serveur (8) pour l'essentiel sans confirmation en retour par l'ordinateur serveur (8) de la réception des autres paquets de données (24, 24ₘ, 24_{mUDP}) par le fait que le code de programme supprime pour l'essentiel complètement des autres paquets de données (24, 24ₘ, 24_{mUDP}) les demandes de confirmation en retour de la réception des autres paquets de données (24, 24ₘ, 24_{mUDP}) créées par l'ordinateur client (12) pendant la présentation du programme applicatif interactif (26) ou la saisie de données et devant être transmises à l'ordinateur serveur (8), avant que celles-ci soient transmises à l'ordinateur serveur (8), et
- provoque pour conclure la transmission des autres paquets de données (24, 24ₘ, 24_{mUDP}) la transmission d'un autre paquet de données créé en vue de sa transmission selon le protocole de réseau TCP.

23. Support de données selon la revendication 22, **caractérisé en ce qu'**il comporte un code de programme qui supprime pour l'essentiel complètement des paquets de données (20, 20ₘ, 20_{mUDP}) les demandes de confirmation en retour de la réception des paquets de données (20, 20ₘ, 20_{mUDP}) créées par le programme de traitement de données (10) de l'ordinateur serveur (8) pendant la présentation du programme applicatif interactif (26) et devant être transmises à l'ordinateur client (12) avant que celles-ci soient transmises à l'ordinateur client (12).
